(19) Europäisches Patentamt European Patent Office Office européen des brevets

(11) EP 4 726 899 A1

(12) EUROPEAN PATENT APPLICATION
published in accordance with Art. 153(4) EPC

(43) Date of publication:
15.04.2026 Bulletin 2026/16

(51) International Patent Classification (IPC):
H01M 50/417 (2021.01)   H01M 50/491 (2021.01)
H01M 10/0525 (2010.01)

(21) Application number: 24818409.5

(22) Date of filing: 28.04.2024

(52) Cooperative Patent Classification (CPC):
Y02E 60/10

(86) International application number:
PCT/CN2024/090301

(87) International publication number:
WO 2024/250875 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 09.06.2023 CN 202310685198

(71) Applicant: Ningde Amperex Technology Limited
Ningde, Fujian 352100 (CN)

(72) Inventors:
• KONG, Gengjin
  Ningde, Fujian 352100 (CN)
• WEI, Zengbin
  Ningde, Fujian 352100 (CN)
• TAO, Xinghua
  Ningde, Fujian 352100 (CN)

(74) Representative: Kraus & Lederer PartGmbB
Thomas-Wimmer-Ring 15
80539 München (DE)

(54) ELECTROCHEMICAL APPARATUS AND ELECTRONIC APPARATUS

(57) An electrochemical apparatus and an electronic apparatus are provided. The electrochemical apparatus includes a positive electrode plate, a negative electrode plate, a separator, and an electrolyte, the separator is disposed between the positive electrode plate and the negative electrode plate, the separator includes a porous substrate, and the porous substrate includes a first polyethylene resin material and a second polyethylene resin material; where a melting enthalpy of the first polyethylene resin material is 110 J/g to 160 J/g, a melting enthalpy of the second polyethylene resin material is 170 J/g to 205 J/g, and a shutdown rate of the separator is 10 kΩ/min to 80 kΩ/min; based on the mass of the porous substrate, a mass percentage of the first polyethylene resin material is 10% to 40%, and a mass percentage of the second polyethylene resin material is 45% to 88%. The separator exhibits a relatively high shutdown rate, enabling rapid shutdown at a relatively low temperature with good shutdown effectiveness, thereby improving the high-temperature safety performance and electrochemical performance of the electrochemical apparatus.

FIG. 1

EP 4 726 899 A1

**EP 4 726 899 A1**

**Description**

The present application claims priority to the Chinese patent application filed with the China National Intellectual Property Administration on June 9, 2023, with application number 202310685198.0 and titled "Electrochemical apparatus and Electronic apparatus", which is incorporated herein by reference in its entirety.

**TECHNICAL FIELD**

The present application relates to the field of electrochemical technologies, and particularly to an electrochemical apparatus and an electronic apparatus.

**BACKGROUND**

Electrochemical apparatuses (for example, lithium-ion batteries) have many advantages such as high specific energy density, long cycle life, high nominal voltage, low self-discharge rate, small volume, and light weight, and thus have been widely used in the field of consumer electronics.

With increasingly higher requirements for energy density (ED) and fast-charging performance of lithium-ion batteries, the design of lithium-ion batteries has become increasingly extreme. At present, high-voltage positive electrodes and fast-charging graphite are mostly used to improve ED and fast-charging performance. However, due to their poor stability and heat resistance, the reactions of high-voltage positive electrodes and fast-charging graphite with the electrolyte intensify at a temperature above a certain level, generating a large amount of heat. The separator cannot shut down in a timely and effective manner, resulting in a slow response, and thus cannot prevent the transfer of ions and the diffusion of heat, and substances between the positive and negative electrodes, thereby affecting the high-temperature safety performance of the battery.

**SUMMARY**

An objective of the present application is to provide an electrochemical apparatus and an electronic apparatus, so as to improve the high-temperature safety performance and electrochemical performance of the electrochemical apparatus.

It should be noted that, in the summary of the invention of the present application, a lithium-ion battery is taken as an example of the electrochemical apparatus to explain the present application, but the electrochemical apparatus of the present application is not limited to lithium-ion batteries. The specific technical solutions are as follows:

A first aspect of the present application provides an electrochemical apparatus, including a positive electrode plate, a negative electrode plate, a separator, and an electrolyte, where the separator is disposed between the positive electrode plate and the negative electrode plate, the separator includes a porous substrate, and the porous substrate includes a first polyethylene resin material and a second polyethylene resin material. A melting enthalpy of the first polyethylene resin material is 110 J/g to 160 J/g, preferably, the melting enthalpy of the first polyethylene resin material is 130 J/g to 160 J/g. A melting enthalpy of the second polyethylene resin material is 170 J/g to 205 J/g, preferably, the melting enthalpy of the second polyethylene resin material is 180 J/g to 205 J/g. Based on the mass of the porous substrate, a mass percentage of the first polyethylene resin material is 10% to 40%, preferably, the mass percentage of the first polyethylene resin material is 15% to 30%, and a mass percentage of the second polyethylene resin material is 45% to 88%, preferably, the mass percentage of the second polyethylene resin material is 60% to 80%. A shutdown rate of the separator is 10 kΩ/min to 80 kΩ/min, preferably, the shutdown rate of the separator is 25 kΩ/min to 80 kQ/min. In the present application, by controlling the melting enthalpy and mass percentage of the first polyethylene resin material and the second polyethylene resin material within the above ranges, and by ensuring that the melting enthalpy of the first polyethylene resin material is lower than that of the second polyethylene resin material, the separator can achieve rapid shutdown at a relatively low temperature as the electrochemical apparatus heats up, thereby increasing the shutdown rate of the separator and exhibiting good shutdown effectiveness for the separator. Moreover, the separator maintains relatively high strength, so that the high-temperature safety performance and electrochemical performance of the electrochemical apparatus are improved.

In some embodiments of the present application, a melt flow rate of the first polyethylene resin material is 5 g/10 min to 20 g/10 min, preferably, the melt flow rate of the first polyethylene resin material is 8 g/10 min to 18 g/10 min; and a melt flow rate of the second polyethylene resin material is 0.1 g/10 min to 3.0 g/10 min, preferably, the melt flow rate of the second polyethylene resin material is 0.2 g/10 min to 1.5 g/10 min. By controlling the melt flow rate of the first polyethylene resin material and the second polyethylene resin material within the above ranges, it is beneficial for the separator to achieve rapid shutdown at a relatively low temperature, thereby improving the high-temperature safety performance of the electrochemical apparatus.

In some embodiments of the present application, a maximum resistance of the separator after high-temperature shutdown is in a range of 10 k$\Omega$ to 400 k$\Omega$, preferably 40 k$\Omega$ to 400 k$\Omega$. When the maximum resistance of the separator after high-temperature shutdown is within the above range, the separator exhibits good shutdown effectiveness, and the electrochemical apparatus exhibits good high-temperature safety performance.

In some embodiments of the present application, the porous substrate further includes a high-temperature resistant resin. The high-temperature resistant resin includes one of a crystalline polymer or an amorphous polymer, including at least one of polypropylene, poly(4-methylpentene), polytetrafluoroethylene (PTFE), polyvinylidene fluoride, and cycloolefin copolymer (COC), and based on the mass of the porous substrate, a mass percentage of the high-temperature resistant resin is 2% to 15%. When the above type of high-temperature resistant resin is added to the porous substrate and the mass percentage of the high-temperature resistant resin is controlled within the above range, it is beneficial to improving the thermal stability and strength of the separator and increasing the meltdown temperature of the separator, thereby improving the high-temperature safety performance of the electrochemical apparatus.

In some embodiments of the present application, a tortuosity of the separator is 1.1 to 2.0. When the tortuosity of the separator is within the above range, the separator exhibits good pore permeability, helping to improve the low-temperature cycling performance and room-temperature discharge performance of the electrochemical apparatus.

In some embodiments of the present application, the electrolyte includes fluoroethylene carbonate (FEC), and based on the mass of the electrolyte, a mass percentage of fluoroethylene carbonate is 0.1% to 12%, preferably 0.1% to 5%. By controlling the mass percentage of fluoroethylene carbonate in the electrolyte within the above range, decomposition of the electrolyte at high temperature can be suppressed, helping to reduce the reaction between the electrolyte and the positive electrode plate as well as the reaction between the electrolyte and the negative electrode plate, and thereby improving the high-temperature safety performance of the electrochemical apparatus.

A second aspect of the present application provides an electronic apparatus including the electrochemical apparatus in any one of the foregoing embodiments. The electrochemical apparatus provided in the present application exhibits good high-temperature safety performance and electrochemical performance, so that the electronic apparatus provided in the present application exhibits good high-temperature safety performance and electrochemical performance.

Beneficial effects of the present application

The present application provides an electrochemical apparatus and an electronic apparatus. The electrochemical apparatus includes a positive electrode plate, a negative electrode plate, a separator, and an electrolyte, and the separator is disposed between the positive electrode plate and the negative electrode plate. The separator includes a porous substrate, and the porous substrate includes a first polyethylene resin material and a second polyethylene resin material. A melting enthalpy of the first polyethylene resin material is 110 J/g to 160 J/g, and a melting enthalpy of the second polyethylene resin material is 170 J/g to 205 J/g; based on the mass of the porous substrate, a mass percentage of the first polyethylene resin material is 10% to 40%, and a mass percentage of the second polyethylene resin material is 45% to 88%. A shutdown rate of the separator is 10 k$\Omega$/min to 80 k$\Omega$/min. In the present application, by controlling the melting enthalpy and mass percentage of the first polyethylene resin material and the second polyethylene resin material within the above ranges, and by ensuring that the melting enthalpy of the first polyethylene resin material is lower than that of the second polyethylene resin material, the separator can achieve rapid shutdown at a relatively low temperature as the electrochemical apparatus heats up, so that the separator exhibits a relatively high shutdown rate and good shutdown effectiveness. Moreover, the separator maintains relatively high strength, so that the high-temperature safety performance and electrochemical performance of the electrochemical apparatus are improved.

Certainly, any product or method implementing the present application does not necessarily need to achieve all the advantages described above.

## BRIEF DESCRIPTION OF DRAWINGS

In sequence to more clearly illustrate the technical solutions in the embodiments of the present application, the accompanying drawing required to be used in the description of the embodiments will be briefly introduced below. Obviously, the accompanying drawing in the following description merely illustrates some embodiments of the present application. For those of ordinary skill in the art, other drawings may be obtained according to the accompanying drawing.

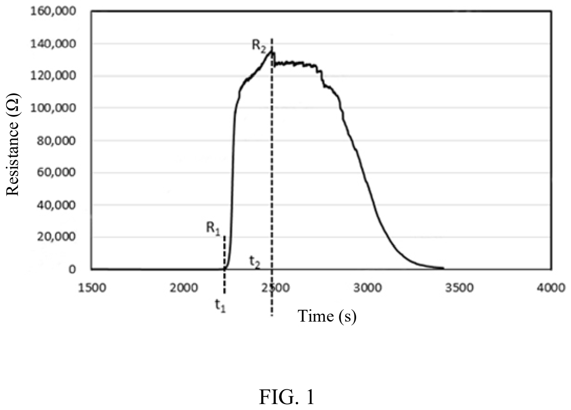

FIG. 1 is a time-resistance curve of the separator in Example 1-2.

## DESCRIPTION OF EMBODIMENTS

The technical solutions in the embodiments of the present application will be clearly and completely described below in conjunction with the accompanying drawing in the embodiments of the present application. Obviously, the described embodiments are only a part of the embodiments of the present application, rather than all the embodiments.

Based on the embodiments in the present application, all other embodiments obtained by those of ordinary skill in the art based on the present application fall within the protection scope of the present application.

It should be noted that, in the detailed description of the present application, the lithium-ion battery is taken as an example of the electrochemical apparatus to explain the present application, but the electrochemical apparatus of the present application is not limited to the lithium-ion battery.

A first aspect of the present application provides an electrochemical apparatus, including a positive electrode plate, a negative electrode plate, a separator, and an electrolyte, where the separator is disposed between the positive electrode plate and the negative electrode plate, the separator includes a porous substrate, and the porous substrate includes a first polyethylene resin material and a second polyethylene resin material. The melting enthalpy $H_1$ of the first polyethylene resin material is 110 J/g to 160 J/g, preferably, the melting enthalpy $H_1$ of the first polyethylene resin material is 130 J/g to 160 J/g. For example, the melting enthalpy $H_1$ of the first polyethylene resin material may be 110 J/g, 120 J/g, 130 J/g, 140 J/g, 145 J/g, 150 J/g, 160 J/g, or a range consisting of any two of these values. The melting enthalpy $H_2$ of the second polyethylene resin material is 170 J/g to 205 J/g, preferably, the melting enthalpy $H_2$ of the second polyethylene resin material is 180 J/g to 205 J/g. For example, the melting enthalpy $H_2$ of the second polyethylene resin material may be 170 J/g, 175 J/g, 180 J/g, 185 J/g, 190 J/g, 195 J/g, 200 J/g, 205 J/g, or a range consisting of any two of these values. Based on the mass of the porous substrate, the mass percentage x of the first polyethylene resin material is 10% to 40%, preferably, the mass percentage x of the first polyethylene resin material is 15% to 30%. For example, the mass percentage x of the first polyethylene resin material may be 10%, 15%, 20%, 25%, 30%, 35%, 40%, or a range consisting of any two of these values. The mass percentage y of the second polyethylene resin material is 45% to 88%, preferably, the mass percentage y of the second polyethylene resin material is 60% to 80%. For example, the mass percentage y of the second polyethylene resin material may be 45%, 50%, 60%, 70%, 80%, 88%, or a range consisting of any two of these values. A shutdown rate of the separator is 10 kΩ/min to 80 kΩ/min, preferably, the shutdown rate of the separator is 25 kΩ/min to 80 kΩ/min. For example, the shutdown rate of the separator may be 10 kΩ/min, 20 kΩ/min, 25 kΩ/min, 30 kΩ/min, 40 kΩ/min, 60 kΩ/min, 80 kΩ/min, or a range consisting of any two of these values. Generally, a material with a lower melting enthalpy exhibits better flowability at the same temperature. In the present application, by controlling the melting enthalpy of the first polyethylene resin material and the second polyethylene resin material within the above ranges, and by ensuring that the melting enthalpy of the first polyethylene resin material is lower than that of the second polyethylene resin material, the separator can achieve rapid shutdown at a relatively low temperature as the electrochemical apparatus heats up, thereby increasing the shutdown rate of the separator. When the shutdown rate of the separator is within the range of the present application, the shutdown effectiveness is good, the diffusion of heat and substances in the electrochemical apparatus can be effectively prevented. and substance exchange between the positive electrode plate and the negative electrode plate can be prevented. Moreover, the separator maintains relatively high strength, so that the high-temperature safety performance and electrochemical performance of the electrochemical apparatus are improved. When the mass percentage of the first polyethylene resin material is too low (for example, lower than 10%) or the mass percentage of the second polyethylene resin material is too high (for example, higher than 88%), the separator exhibits a too-slow shutdown rate and an inferior shutdown effectiveness; when the mass percentage of the first polyethylene resin material is too high (for example, higher than 40%) or the mass percentage of the second polyethylene resin material is too low (for example, lower than 45%), the separator exhibits decreased strength and is prone to deformation or rupture, causing a short circuit between the positive electrode plate and the negative electrode plate. Therefore, in the present application, by controlling the melting enthalpy and mass percentage of the first polyethylene resin material and the second polyethylene resin material within the above ranges, and by ensuring that the melting enthalpy of the first polyethylene resin material is lower than that of the second polyethylene resin material, the shutdown rate and strength of the separator can be balanced, thereby improving the high-temperature safety performance and electrochemical performance of the electrochemical apparatus. In the present application, high temperature refers to a temperature greater than or equal to 125° C. The shutdown rate is calculated as $(R_2 - R_1)/(t_2 - t_1)$. The shutdown rate of the separator is calculated from the time-resistance curve measured using a temperature-rise internal resistance method, where $R_1$ is the resistance of the fixture at the onset of resistance increase, $R_2$ is the maximum resistance measured by the fixture, $t_1$ is the time when the resistance starts to increase, and $t_2$ is the time when the resistance reaches the maximum.

In some embodiments of the present application, the melt flow rate $MFR_1$ of the first polyethylene resin material is 5 g/10 min to 20 g/10 min, preferably, the melt flow rate $MFR_1$ of the first polyethylene resin material is 8 g/10 min to 18 g/10 min. For example, the melt flow rate $MFR_1$ of the first polyethylene resin material may be 5 g/10 min, 8 g/10 min, 10 g/10 min, 15 g/10 min, 18 g/10 min, 20 g/10 min, or a range consisting of any two of these values. The melt flow rate $MFR_2$ of the second polyethylene resin material is 0.1 g/10 min to 3.0 g/10 min, preferably, the melt flow rate $MFR_2$ of the second polyethylene resin material is 0.2 g/10 min to 1.5 g/10 min. For example, the melt flow rate $MFR_2$ of the second polyethylene resin material may be 0.1 g/10 min, 0.2 g/10 min, 0.5 g/10 min, 1.0 g/10 min, 1.5 g/10 min, 2.0 g/10 min, 2.5 g/10 min, 3.0 g/10 min, or a range consisting of any two of these values. Generally, a material with a higher melt flow rate exhibits better flowability at the same temperature. By controlling the melt flow rate of the first polyethylene resin material and the second polyethylene resin material within the above ranges, and by ensuring that the melt flow rate of the first polyethylene resin material is higher than that of the second polyethylene resin material, it is beneficial for the separator to achieve rapid shutdown at a relatively low temperature as the electrochemical apparatus heats up. Moreover, the separator maintains relatively high strength, so that the high-temperature safety performance of the electrochemical apparatus is improved.

In some embodiments of the present application, a maximum resistance of the separator after high-temperature shutdown is in the range of 10 k$\Omega$ to 400 k$\Omega$, preferably 40 k$\Omega$ to 400 k$\Omega$. For example, the maximum resistance of the separator after high-temperature shutdown may be 10 k$\Omega$, 40 k$\Omega$, 100 k$\Omega$, 200 k$\Omega$, 300 k$\Omega$, 400 k$\Omega$, or a range consisting of any two of these values. When the maximum resistance of the separator after high-temperature shutdown is greater than or equal to 10 k$\Omega$, the separator exhibits good shutdown effectiveness, so that substance exchange between the positive electrode plate and the negative electrode plate can be effectively prevented, thereby providing the electrochemical apparatus with good high-temperature safety performance.

In some embodiments of the present application, the shutdown temperature $T_1$ of the separator is 120°C to 145°C, and the meltdown temperature $T_2$ is 155°C to 250°C. For example, the shutdown temperature $T_1$ of the separator may be 120°C, 125°C, 130°C, 135°C, 140°C, 145°C, or a range consisting of any two of these values, and the meltdown temperature $T_2$ of the separator may be 155°C, 175°C, 200°C, 220°C, 240°C, 250°C, or a range consisting of any two of these values. This indicates that the separator has a relatively low shutdown temperature and a relatively high meltdown temperature, the separator can achieve rapid shutdown at a relatively low temperature, and the separator is not prone to rupture at a relatively high temperature, thereby improving the high-temperature safety performance of the electrochemical apparatus. Here, the relatively low temperature refers to a temperature less than or equal to 140°C, and the relatively high temperature refers to a temperature greater than or equal to 155°C. The shutdown temperature refers to a temperature at which the separator begins to melt and block some of the previously formed pores during the heating process; and the meltdown temperature refers to a temperature at which the separator melts to a certain extent and ruptures, resulting in local or overall short circuit.

In some embodiments of the present application, an average pore size of the separator is 20 nm to 50 nm, and a pore size distribution is 10 nm to 60 nm. For example, the average pore size of the separator is 20 nm, 30 nm, 40 nm, 50 nm, or a range consisting of any two of these values, and the pore size distribution of the separator is 10 nm, 20 nm, 30 nm, 40 nm, 50 nm, 60 nm, or a range consisting of any two of these values. By controlling the average pore size and pore size distribution of the separator within the above ranges, the separator achieves a relatively small pore size, helping to improve the shutdown effectiveness of the separator and thereby improving the safety performance of the electrochemical apparatus.

In some embodiments of the present application, the ionic conductivity S of the separator is 0.3 mS/cm to 2.0 mS/cm. For example, the ionic conductivity of the separator may be 0.3 mS/cm, 0.5 mS/cm, 1.0 mS/cm, 1.5 mS/cm, 2.0 mS/cm, or a range consisting of any two of these values. The ionic conductivity of the separator is related to the average pore size of the separator. When the ionic conductivity of the separator is within the above range, it indicates that the separator exhibits good ionic conduction effectiveness, helping to improve the electrochemical performance of the electrochemical apparatus, such as cycling performance.

In some embodiments of the present application, a tortuosity of the separator is 1.1 to 2.0. For example, the tortuosity of the separator may be 1.1, 1.2, 1.3, 1.4, 1.5, 1.6, 1.7, 1.8, 1.9, 2.0, or a range consisting of any two of these values. The tortuosity of the separator is related to the porosity of the separator, the conductivity of the electrolyte, and the ionic conductivity of the separator. When the tortuosity of the separator is within the above range, it indicates that the separator exhibits good pore permeability, helping to improve the electrochemical performance of the electrochemical apparatus, such as low-temperature capacity retention rate and cycling performance. The present application has no particular limitation on the porosity of the separator, as long as the objective of the present application can be achieved. For example, the porosity of the separator may be 20% to 60%. The present application has no particular limitation on the conductivity of the electrolyte, as long as the objective of the present application can be achieved. For example, the conductivity of the electrolyte may be 5.0 mS/cm to 20 mS/cm.

$$Tortuosity = \sqrt{\text{separator porosity} \times (\text{electrolyte conductivity}) / (\text{separator ionic conductivity S})}.$$

In some embodiments of the present application, the porous substrate further includes a high-temperature resistant resin, and the high-temperature resistant resin includes one of a crystalline polymer or an amorphous polymer. The high-temperature resistant resin includes at least one of polypropylene, poly(4-methylpentene), polytetrafluoroethylene, polyvinylidene fluoride, and cycloolefin copolymer. The crystalline polymer includes at least one of polypropylene, poly(4-methylpentene), polytetrafluoroethylene, or polyvinylidene fluoride, and the amorphous polymer includes cycloolefin copolymer. Based on the mass of the porous substrate, the mass percentage z of the high-temperature resistant resin is 2% to 15%. For example, the mass percentage z of the high-temperature resistant resin may be 2%, 3%, 5%, 7%, 8%, 10%, 12%, 13%, 15%, or a range consisting of any two of these values. When the above type of high-temperature resistant resin is added to the porous substrate and the mass percentage of the high-temperature resistant resin is controlled within the above range, it is beneficial to increasing the meltdown temperature of the separator, improving the thermal stability and strength of the separator, thereby improving the high-temperature safety performance of the electrochemical apparatus.

In some embodiments of the present application, the electrolyte includes fluoroethylene carbonate. Based on the mass of the electrolyte, a mass percentage of fluoroethylene carbonate is 0.1% to 12%, preferably 0.1% to 5%. For example, the mass percentage of fluoroethylene carbonate may be 0.1%, 3%, 5%, 6%, 9%, 10%, 12%, or a range consisting of any two of these values. By controlling the mass percentage of fluoroethylene carbonate in the electrolyte within the above range, it is beneficial to improving the stability of the solid electrolyte interphase film (SEI film) on the surface of the negative electrode plate, suppressing the decomposition of the electrolyte at high temperature, reducing the reaction between the electrolyte and the positive electrode plate as well as the reaction between the electrolyte and the negative electrode plate, while reducing heat generation, thereby improving the high-temperature safety performance of the electrochemical apparatus.

In some embodiments of the present application, a melting point of the first polyethylene resin material is 115°C to 135° C, and a melting point of the second polyethylene resin material is 135°C to 145° C. For example, the melting point of the first polyethylene resin material may be 115° C, 120° C, 125° C, 130° C, 135° C, or a range consisting of any two of these values, and the melting point of the second polyethylene resin material may be 135° C, 138° C, 140° C, 143° C, 145° C, or a range consisting of any two of these values. Generally, a material with a lower melting point exhibits a lower degree of crystalline structure and a lower degree of crystallinity in the molten state, resulting in better flowability at the same temperature. In the present application, by controlling the melting point of the first polyethylene resin material and the second polyethylene resin material within the above ranges, and by ensuring that the melting point of the first polyethylene resin material is lower than that of the second polyethylene resin material, it is beneficial for the separator to achieve rapid shutdown at a relatively low temperature as the electrochemical apparatus heats up. Moreover, the separator maintains relatively high strength, so that the high-temperature safety performance of the electrochemical apparatus is improved.

In some embodiments of the present application, a puncture strength of the separator is in the range of 153 gf to 245 gf, and a puncture strength/thickness is in the range of 10.2 gf/$\mu$m to 30 gf/$\mu$m. This indicates that the separator possesses good puncture resistance, helping to reduce the probability of internal short circuit caused by separator rupture when the electrochemical apparatus is pierced by external objects, thereby improving the high-temperature safety performance of the electrochemical apparatus. The puncture strength refers to the force required for a spherical steel needle with a diameter of 1.0 mm to penetrate the separator at a speed of 300$\pm$10 mm/min.

In some embodiments of the present application, a thickness of the separator is 2 $\mu$m to 15 $\mu$m. For example, the thickness of the separator is 2 $\mu$m, 5 $\mu$m, 8 $\mu$m, 10 $\mu$m, 12 $\mu$m, 15 $\mu$m, or a range consisting of any two of these values. By controlling the thickness of the separator within the above range, the electrochemical apparatus exhibits good high-temperature safety performance and relatively high energy density.

The present application has no particular limitation on the preparation method of the separator, as long as the objective of the present application can be achieved. For example, the preparation method of the separator may include but is not limited to the following steps: mixing a first polyethylene resin material, a second polyethylene resin material, and a high-temperature resistant resin uniformly to obtain a polyolefin material; mixing an additive and a solvent uniformly to obtain a mixed solvent; then mixing the polyolefin material and the mixed solvent uniformly and feeding the resulting mixture into an extrusion system, followed by extrusion through a die and casting and cooling into a film to obtain a substrate; subjecting the substrate to longitudinal and transverse stretching, extracting with dichloromethane, and drying to obtain a porous substrate; and performing secondary stretching, heat setting, and winding on the porous substrate to obtain the desired separator. The present application has no particular limitation on the additive, as long as the objective of the present application can be achieved. For example, the additive may be at least one of tetrakis[$\beta$-(3,5-di-tert-butyl-4-hydroxyphenyl)propanoic acid] pentaerythritol ester, tris(2,4-di-tert-butylphenyl) phosphite, octadecyl $\beta$-(3,5-di-tert-butyl-4-hydroxyphenyl)propionate, 2,5-di-tert-butylhydroquinone, or 2,5-di-tert-amylhydroquinone. The present application has no particular limitation on the addition amount of the additive, as long as the objective of the present application can be achieved. For example, based on the total mass of the first polyethylene resin material, the second polyethylene resin material, and the high-temperature resistant resin, an addition amount of the additive may be 0.1% to 1%. When multiple types of additives are included, the present application does not limit the addition amounts of different additives, as long as the objective of the present application can be achieved. The present application has no particular limitation on the solvent, as long as the objective of the present application can be achieved. For example, the solvent may be at least one of paraffin oil, mineral oil, diphenyl ether, or xylene. The present application has no particular limitation on the addition amount of the solvent, as long as the objective of the present application can be achieved. The present application has no particular limitation on the standards for transverse stretching and longitudinal stretching, as long as the objective of the present application can be achieved. For example, the transverse stretching and longitudinal stretching ratio may be 4 times to 10 times. The present application has no particular limitation on the temperature and time of extraction, as long as the objective of the present application can be achieved. For example, the extraction temperature may be 20°C to 35°C, and the extraction time may be 20 min to 40 min. The present application has no particular limitation on the standard for secondary stretching, as long as the objective of the present application can be achieved. For example, the secondary stretching ratio may be 1 time to 3 times. The present application has no particular limitation on the temperature of heat setting, as long as the objective of the present application can be achieved. For example, the heat setting temperature may be 100°C to 125°C.

The present application has no particular limitation on the positive electrode plate, as long as the objective of the present application can be achieved. For example, the positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one surface of the positive electrode current collector in its thickness direction or on both surfaces of the positive electrode current collector in its thickness direction. It should be noted that the "surface" here may be an entire region or a partial region of the surface of the positive electrode current collector, and the present application has no particular limitation, as long as the objective of the present application can be achieved. The present application has no particular limitation on the positive electrode current collector, as long as the objective of the present application can be achieved. For example, the positive electrode current collector may include aluminum foil, aluminum alloy foil, a composite current collector (for example, aluminum-carbon composite current collector), or the like.

The positive electrode material layer of the present application includes a positive electrode active material, and the present application has no particular limitation on the type of the positive electrode active material, as long as the objective of the present application can be achieved. For example, the positive electrode active material may include at least one of lithium nickel cobalt manganese oxide (NCM811, NCM622, NCM523, NCM111), lithium nickel cobalt aluminate, lithium iron phosphate, lithium-rich manganese-based material, lithium cobalt oxide ($LiCoO_2$), lithium manganese oxide, lithium manganese iron phosphate, or lithium titanate. In the present application, the positive electrode active material may further include non-metal elements, for example, the non-metal elements include at least one of fluorine, phosphorus, boron, chlorine, silicon, or sulfur. In the present application, there is no particular limitation on the thickness of the positive electrode current collector and the positive electrode material layer, as long as the objective of the present application can be achieved. For example, the thickness of the positive electrode current collector is 5 $\mu$m to 20 $\mu$m, preferably 6 $\mu$m to 18 $\mu$m. The thickness of the single-sided positive electrode material layer is 30 $\mu$m to 120 $\mu$m.

In the present application, the positive electrode material layer may further include a conductive agent and a binder. The present application has no particular limitation on the type of the binder in the positive electrode material layer, as long as the objective of the present application can be achieved. For example, the binder may include but is not limited to at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polyvinyl ether, polymethyl methacrylate, polytetrafluoroethylene, or polyhexafluoropropylene. The present application has no particular limitation on the type of the conductive agent in the positive electrode material layer, as long as the objective of the present application can be achieved. For example, the conductive agent may include but is not limited to at least one of conductive carbon black (Super P), carbon nanotubes (CNT), carbon fiber, flake graphite, Ketjen black, graphene, metal material, or conductive polymer. The carbon nanotubes may include but are not limited to single-walled carbon nanotubes and/or multi-walled carbon nanotubes. The carbon fiber may include but is not limited to vapor-grown carbon fiber (VGCF) and/or nanofiber carbon. The metal material may include but is not limited to metal powder and/or metal fiber, specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole. The present application has no particular limitation on the mass ratio of the positive electrode active material, conductive agent, and binder in the positive electrode material layer, and those skilled in the art may select according to actual needs, as long as the objective of the present application can be achieved.

The present application has no particular limitation on the negative electrode plate, as long as the objective of the present application can be achieved. For example, the negative electrode plate includes a negative electrode current collector and a negative electrode material layer disposed on at least one surface of the negative electrode current collector. The "negative electrode material layer disposed on at least one surface of the negative electrode current collector" means that the negative electrode material layer may be disposed on one surface of the negative electrode current collector in its thickness direction or on both surfaces of the negative electrode current collector in its thickness direction. It should be noted that the "surface" here may be an entire region or a partial region of the surface of the negative electrode current collector, and the present application has no particular limitation, as long as the objective of the present application can be achieved. The present application has no particular limitation on the negative electrode current collector, as long as the objective of the present application can be achieved. For example, the negative electrode current collector may include copper foil, copper alloy foil, nickel foil, stainless steel foil, titanium foil, foamed nickel, foamed copper, a composite current collector (for example, lithium-copper composite current collector, carbon-copper composite current collector, nickel-copper composite current collector, and titanium-copper composite current collector), or the like. The negative electrode material layer of the present application includes a negative electrode active material. The present application has no particular limitation on the type of the negative electrode active material, as long as the objective of the present application can be achieved. For example, the negative electrode active material may include at least one of natural graphite, artificial graphite, mesocarbon microbeads (MCMB), hard carbon, soft carbon, silicon, silicon-carbon composite, $SiO_x$ (0 < x <2 ), Li-Sn alloy, Li-Sn-O alloy, Sn, SnO, $SnO_2$, spinel-structured lithiated titanate $Li_4Ti_5O_{12}$, Li-Al alloy, or metallic lithium. In the present application, there is no particular limitation on the thickness of the negative electrode current collector and the negative electrode material layer, as long as the objective of the present application can be achieved. For example, the thickness of the negative electrode current collector is 4 $\mu$m to 20 $\mu$m, and the thickness of the negative electrode active material layer is 30 $\mu$m to 130 $\mu$m. Optionally, the negative electrode active material layer may further include at least one of a conductive agent, a stabilizer, and a binder. The present application has no particular limitation on the type of the conductive agent, stabilizer, and binder in the negative electrode active material layer, as long as the objective of the present application can be achieved. The present application has no particular limitation on the mass ratio of the negative electrode active material, conductive agent, stabilizer, and binder in the negative electrode material layer, as long as the objective of the present application can be achieved.

In the present application, the electrochemical apparatus includes an electrolyte. In addition to fluoroethylene carbonate, the electrolyte further includes a lithium salt and a non-aqueous solvent. The present application has no particular limitation on the lithium salt, as long as the objective of the present application can be achieved. For example, the lithium salt may include but is not limited to at least one of $LiPF_6$, $LiBF_4$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalate)borate (LiBOB), or lithium difluoro(oxalate)borate. The present application has no particular limitation on the content of the lithium salt in the electrolyte, as long as the objective of the present application can be achieved. For example, based on the mass of the electrolyte, a mass percentage of the lithium salt is 5% to 23%. For example, a concentration of the lithium salt in the electrolyte may be 5%, 8%, 12%, 16%, 20%, 23%, or a range consisting of any two of these values. The present application has no particular limitation on the non-aqueous solvent, as long as the objective of the present application can be achieved. For example, the non-aqueous solvent may include but is not limited to at least one of carbonate compound, carboxylate compound, ether compound, or other organic solvent. The carbonate compound may include but is not limited to at least one of chain carbonate compound, cyclic carbonate compound, or fluorinated carbonate compound. The chain carbonate compound may include but is not limited to at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorinated carbonate compound may include but is not limited to at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone. The ether compound may include but is not limited to at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include but is not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. The present application has no particular limitation on the content of the non-aqueous solvent in the electrolyte, as long as the objective of the present application can be achieved. The content of the non-aqueous solvent is calculated as 100% minus the content of the lithium salt and the content of fluoroethylene carbonate.

The electrochemical apparatus of the present application is not particularly limited and may include any apparatus in which an electrochemical reaction occurs. In one embodiment of the present application, the electrochemical apparatus may include but is not limited to: lithium-ion secondary battery (lithium-ion battery), lithium polymer secondary battery, or lithium-ion polymer secondary battery.

The preparation process of the electrochemical apparatus of the present application is well known to those skilled in the art, and the present application has no particular limitation. For example, the preparation process may include but is not limited to the following steps: stacking the positive electrode plate, the separator, and the negative electrode plate in sequence, and winding or folding as needed to obtain an electrode assembly with a wound structure, placing the electrode assembly into a packaging bag, injecting the electrolyte into the packaging bag and sealing to obtain an electrochemical apparatus; or stacking the positive electrode plate, the separator, and the negative electrode plate in sequence, then fixing the four corners of the entire stacked structure with tape to obtain an electrode assembly with a stacked structure, placing the electrode assembly into a packaging bag, injecting the electrolyte into the packaging bag and sealing to obtain an electrochemical apparatus. In addition, an overcurrent prevention element, a guide plate, and the like may also be placed in the packaging bag to prevent pressure increase, overcharge, and overdishcarge inside the electrochemical apparatus.

The present application has no limitation on the packaging bag, and those skilled in the art may select according to actual needs, as long as the objective of the present application can be achieved. For example, an aluminum-plastic film packaging bag may be used.

A second aspect of the present application provides an electronic apparatus including the electrochemical apparatus in any one of the foregoing embodiments. The electrochemical apparatus provided in the present application exhibits good high-temperature safety performance, so that the electronic apparatus provided in the present application exhibits good high-temperature safety performance.

The electronic apparatus of the present application is not particularly limited and may be any electronic apparatus known in the prior art. For example, the electronic apparatus may include but is not limited to notebook computer, pen input computer, mobile computer, e-book player, portable telephone, portable fax machine, portable copier, portable printer, stereo headset, video recorder, LCD television, portable cleaner, portable CD player, mini disc, transceiver, electronic notebook, calculator, memory card, portable recorder, radio, backup power supply, motor, automobile, motorcycle, electric bicycle, bicycle, lighting fixture, toy, game console, clock, electric tool, flash lamp, camera, large household battery, and lithium-ion capacitor.

## Examples

Hereinafter, examples and comparative examples are given to more specifically illustrate the embodiments of the present application. Various tests and evaluations were carried out according to the following methods.

## Test methods and devices

## Melting enthalpy test

A differential scanning calorimeter was used to test the melting enthalpy and melting point of the first polyethylene resin material, the second polyethylene resin material, and the high-temperature resistant resin in each example and comparative example. The sample material was placed in a crucible and heated from room temperature to 250°C at a rate of 10°C/min under a nitrogen atmosphere to obtain a differential scanning calorimetry curve (DSC curve). The melting enthalpy of the sample material was calculated from the area enclosed by the melting peak in the DSC curve, and the peak temperature of the melting peak in the DSC curve was taken as the melting point of the sample material.

Melting enthalpy = integral area of melting endothermic curve / mass.

## Test for shutdown rate, shutdown temperature, maximum resistance, and meltdown temperature of the separator

A temperature-rise internal resistance method was used to test the shutdown temperature $T_1$ of the separator in each example and comparative example. A separator was cut into a fixed size of 5 cm $\times$ 5 cm and placed in a component composed of ceramic and stainless steel fixtures. Then, 5 g of electrolyte was injected, the fixture was placed in an oven at 250°C and heated at a rate of 10°C/min, and both the resistance and temperature of the fixture were monitored, and data such as the resistance and temperature of the fixture, oven temperature, and time were output.

Based on the time-resistance curve, the shutdown rate of the separator was calculated using the following formula:

$$\text{Shutdown rate} = (R_2 - R_1)/(t_2 - t_1);$$

where $R_1$ is the resistance of the fixture at the onset of resistance increase, $R_2$ is the maximum resistance measured by the fixture, $t_1$ is the time when the resistance starts to increase, and $t_2$ is the time when the resistance reaches the maximum.

Based on the temperature-resistance curve, the temperature at which the resistance showed a sudden increase (reached 1000 $\Omega$) was the shutdown temperature $T_1$ of the separator; the maximum resistance was the maximum resistance of the separator.

On the basis of the above test for the shutdown temperature of the separator, the test was continued. When the resistance suddenly dropped to the same level as the resistance at the shutdown temperature, the corresponding temperature was the meltdown temperature $T_2$ of the separator.

The composition and preparation method of the electrolyte in the test were the same as those in Example 1-1.

**Melt flow rate test**

A melt flow rate tester was used to test the melt flow rate of the first polyethylene resin material in each example and comparative example. The instrument was heated to 190° C, a standard die of $\varphi 2.095 \pm 0.005$ mm was mounted onto the instrument, the resin material was placed in the barrel and compacted, followed by a 10-min dwell. The sample material cutting time was set to 60 s. The resin material was extruded under a load (21.6 kg), and the melt flow rate of the first polyethylene resin material was calculated as $MFR_1 = mT/t$, where t is the sample material cutting time of 60 s, m is the mass of the extrudate, and T is 600 s.

By replacing the first polyethylene resin material with the second polyethylene resin material and applying the same test method, $MFR_2$ of the second polyethylene resin material was obtained.

**Ionic conductivity test of the separator**

(1) Preparation of separator: The separator to be tested was cut into pieces of the same size (45.3 mm $\times$ 33.7 mm), placed in an environment of 60°C and dried for more than 4 h, and then transferred to a glove box for subsequent use;

(2) preparation of blank symmetric lithium-ion battery packaging bag: A blank symmetric lithium-ion battery packaging bag assembled with copper foil to copper foil as the current collector and without the separator was used, the packaging bag was dried in an environment of 60°C for more than 4 h before use, and then transferred to a glove box for subsequent use;

(3) assembly of symmetric lithium-ion battery: A symmetric battery of graphite electrode plate to graphite electrode plate was assembled in the blank symmetric lithium-ion battery packaging bag, and different layers (1, 2, 3, 4, 5 layers) of separators were assembled in situ between the symmetric electrodes in the glove box to form symmetric lithium-ion batteries (5 parallel samples were assembled for each layer count of the symmetric battery); the packaging bag was side-sealed with a simple packaging machine, electrolyte (300 $\mu$L) was injected with a pipette, and the bottom was sealed;

(4) mounting of symmetric batteries into the fixture: The assembled symmetric lithium-ion batteries were placed in the glove box overnight to allow the electrolyte to fully wet the separator; and

(5) electrochemical impedance spectroscopy (EIS) test: Before the EIS measurement, the symmetric lithium-ion batteries with different number of separator layers were placed in a high-low temperature chamber at 25°C for half an hour, and EIS at the set temperature was measured; the EIS conditions were set to 1 kHz with a disturbance voltage of 5 mV. The ionic conductivity S of the separator was calculated based on the test results.

A scatter plot was made of the resistance obtained from the symmetric batteries with different separator layers versus the number n of layers, and then linear fitting was performed. The slope was taken as the resistance of the separator, and the ionic conductivity S of the separator can be calculated based on the following formula.

Ionic conductivity S = separator thickness / (separator resistance $\times$ effective area for ion transport through separator during impedance test).

The effective area for ion transport through the separator during impedance test was 153.86 $mm^2$, and the composition and preparation method of the negative electrode plate and electrolyte in the test were the same as those in Example 1-1.

Porosity of separator

$$\text{Porosity} = 1 - W/\rho V,$$

where W is the weight of the separator under test; $\rho$ is the density of the porous substrate, the density of the porous substrate is obtained by weighted average of the density of each material, $\rho$ = polyethylene proportion $\times$ polyethylene material density + high-temperature resistant resin proportion $\times$ high-temperature resistant resin density; V is the volume when the separator under test is weighed; V = separator surface area $\times$ separator thickness.

**Conductivity of electrolyte**

The conductivity of the electrolyte was obtained by a conductivity tester. Two parallel platinum electrodes with a distance of L and a cross-sectional area of A were immersed in the electrolyte under test, the resistance R between the two electrodes was measured, and the conductivity of the electrolyte was calculated by the formula $L/(R \times A)$; where L is 1 cm, and A is 0.25 cm$^2$.

**Test for tortuosity of separator**

After measuring the ionic conductivity of the separator, the tortuosity value was calculated according to the following formula:

$$Tortuosity = \sqrt{\text{porosity of separator} \times (\text{conductivity of electrolyte}) / (\text{ionic conductivity S of separator})}.$$

**Hot box test**

The lithium-ion batteries in each example and each comparative example were charged at room temperature at a constant current of 0.5C to a full charge voltage of 4.5 V, and continued to be charged at a constant voltage of 4.5 V to a cut-off current of 0.05C, so that they were in a fully charged state, and the appearance was checked to ensure that the lithium-ion batteries were in a normal usable state. The fully charged batteries were placed in an oven and heated at a rate of 5°C/min until the specified hot box test temperature of 135°C was reached, and kept at a constant temperature for one hour. During this process, the state of the batteries was observed.
Evaluation criterion: The battery does not catch fire or explode.

$$\text{Hot box test pass rate} = \text{number of passes in hot box test} / \text{total number}.$$

**Low-temperature discharge capacity test**

The lithium-ion batteries in each example and each comparative example were tested by the following method, and the low-temperature discharge capacity of the lithium-ion batteries was calculated.
The lithium-ion battery was placed at 25°C for 30 min and discharged at a constant current of 0.2C until the final voltage was 3.0 V; the lithium-ion battery was further fully charged by constant-current charging at a charging current of 1.5C to a full charge voltage of 4.45 V, then constant-voltage charged at the maximum voltage until the current was 0.02C, and then constant-current discharged at a discharge current of 1.0C until the final voltage was 3.0 V. The discharge capacity at 25°C was recorded as $C_0$.
The battery was fully charged at 25°C by constant-current charging at a charging current of 1.5C to a full charge voltage of 4.45 V, then constant-voltage charged at the maximum voltage until the current was 0.02C. The fully charged battery was placed at -20°C for 60 min, and then constant-current discharged at a discharge current of 1.0C until the final voltage was 3.0 V, and the discharge capacity at -20°C was $C_1$.

$$\text{Discharge capacity rate at -20°C} = C_1/C_0 \times 100\%.$$

**Room-temperature cycling performance test**

The lithium-ion batteries of each example and comparative example were repeatedly charged and discharged by the following steps, and the discharge capacity retention rate of the lithium-ion batteries was calculated.
In an environment of 25° C, the lithium-ion battery underwent the first charge and discharge cycle, constant-current charged at a charging current of 2C to a full charge voltage (the designed maximum voltage of the battery being 4.45 V), then constant-voltage charged at the maximum voltage until the current was 0.02C, and then constant-current discharged at a discharge current of 0.5C until the final voltage was 3.0 V. The discharge capacity of the first cycle was recorded; then the above steps were repeated for 1000 charge and discharge cycles, and the discharge capacity at the 1000th cycle was recorded.

Cycle capacity retention rate = (discharge capacity at the 1000th cycle / discharge capacity of the first cycle) $\times$ 100%.

**Example 1-1**

**<Preparation of separator>**

A first polyethylene resin material (mass percentage x=10%, melting enthalpy $H_1$=145 J/g, melt flow rate $MFR_1$=15 g/10 min), a second polyethylene resin material (mass percentage y=88%, melting enthalpy $H_2$=190 J/g, melt flow rate $MFR_2$=1 g/10 min), and polypropylene (mass percentage z=2%) were mixed uniformly to obtain a polyolefin material. The additive tetrakis[β-(3,5-di-tert-butyl-4-hydroxyphenyl)propanoic acid] pentaerythritol ester and the solvent paraffin oil were mixed uniformly at a ratio of 0.2: 100 to obtain a mixed solvent. Then the polyolefin material and the mixed solvent were mixed uniformly at a ratio of 30:70, and the resulting mixture was fed to an extrusion system, followed by extrusion through a T-die, and cast and cooled into a film to obtain a substrate. The substrate was subjected to longitudinal and transverse stretching to a draw ratio of 7 times, extracted in dichloromethane at 25°C for 0.5 h, and dried to obtain a porous substrate. The porous substrate was subjected to secondary stretching to a draw ratio of 1 time, heat-set at 120° C, and wound to obtain the desired separator with a thickness of 7 μm.

**<Preparation of positive electrode plate>**

The active material lithium cobalt oxide, conductive carbon, and binder polyvinylidene fluoride (PVDF) were mixed at a mass ratio of 96:2:2, added with N-methylpyrrolidone (NMP) as a solvent, and fully stirred and uniformly mixed to prepare a slurry with a solid content of 75 wt%. The slurry was coated uniformly on one surface of a positive electrode current collector aluminum foil with a thickness of 10 μm, and the aluminum foil was dried at 90°C to obtain a positive electrode plate having a single-sided positive electrode material layer with a thickness of 48 μm. After the above steps were completed, single-sided coating of the positive electrode plate was completed. Then, the above steps were repeated on the other surface of the aluminum foil to obtain a positive electrode plate with double-sided coating of the positive electrode material layer. After coating, the positive electrode plate was cut into a specification of 74 mm × 86 mm for subsequent use.

**<Preparation of negative electrode plate>**

The active material artificial graphite, conductive agent conductive carbon black (Super P), binder styrene-butadiene rubber (SBR), and thickener sodium carboxymethyl cellulose (CMC) were mixed at a mass ratio of 95:1:3:1, added with deionized water as a solvent, and fully stirred and uniformly mixed to prepare a slurry with a solid content of 70 wt%. The slurry was uniformly coated on one surface of a negative electrode current collector copper foil with a thickness of 8 μm. The copper foil was dried at 110°C to obtain a negative electrode plate with a coating thickness of 50 μm. After the above steps were completed, single-sided coating of the negative electrode plate was completed. Then, the above steps were repeated on the other surface of the negative electrode plate to obtain a negative electrode plate with double-sided coating of the negative electrode active material layer. After coating, the negative electrode plate was cut into a specification of 76 mm × 90 mm for subsequent use.

**<Preparation of electrolyte>**

In an argon atmosphere glove box with a water content of less than 0.001%, ethylene carbonate (EC), propylene carbonate (PC), diethyl carbonate (DEC), and dimethyl carbonate (DMC) were mixed at a mass ratio of 1:1:1:1 to obtain a base solvent, then added with fluoroethylene carbonate and lithium hexafluorophosphate and mixed uniformly to obtain an electrolyte. Based on the mass of the electrolyte, a mass percentage of lithium hexafluorophosphate was 12.5%, and the remainder was the base solvent.

**<Preparation of lithium-ion battery>**

The positive electrode plate, the separator, and the negative electrode plate were stacked in sequence, so that the separator was positioned between the positive electrode plate and the negative electrode plate for separation, and then an electrode assembly with a wound structure was obtained through a winding process. The electrode assembly was placed in an aluminum-plastic film packaging bag, dehydrated at 80° C, injected with the above-prepared electrolyte, and subjected to vacuum packaging, standing, formation, shaping, and other processes to obtain a lithium-ion battery. The upper limit voltage of formation was 4.15 V, the formation temperature was 85° C, and the formation standing time was 2 h.

**Examples 1-2 to 1-15**

The same as Example 1-1 except that relevant preparation parameters were adjusted according to Table 1 in <preparation of separator>.

**Examples 2-1 to 2-16**

The same as Example 1-4 except that relevant preparation parameters were adjusted according to Table 2 in <preparation of separator>.

**Examples 3-1 to 3-6**

The same as Example 1-5 except that in <Preparation of electrolyte>, the content of fluoroethylene carbonate added was adjusted according to Table 3, the content of the base solvent was changed accordingly, and the mass percentage of the lithium salt remained unchanged.

**Comparative Example 1**

The same as Example 1-1 except that the separator was a polyethylene (PE) single-layer film with a thickness of 7 $\mu$m.

**Comparative Example 2**

The same as Example 1-1 except that the separator was a polypropylene (PP) single-layer film with a thickness of 10 $\mu$m.

**Comparative Examples 3 to 11**

The same as Example 1-1 except that the relevant preparation parameters were adjusted according to Table 1 in <Preparation of Separator>.

The preparation parameters and performance parameters of each example and comparative example are shown in Tables 1 to 3.

**Table 1**

| | x (%) | H₁ (J/g) | y (%) | H₂ (J/g) | High-temperature resistant resin material | z (%) | Shutdown rate (kΩ/min) | Maximum resistance (kΩ) | Shutdown temperature $T_1$ (°C) | Meltdown temperature $T_2$ (°C) | Tortuosity | Puncture strength (gf) | Hot box test pass rate | Discharge capacity rate at -20°C (%) | Cycle capacity retention rate (%) |
|---|---|---|---|---|---|---|---|---|---|---|---|---|---|---|---|
| Example 1-1 | 10 | 145 | 88 | 190 | Polypropylene | 2 | 10 | 10 | 145 | 158 | 1.8 | 230 | 6/10 | 71 | 80 |
| Example 1-2 | 12 | 145 | 82 | 190 | Polypropylene | 6 | 25 | 135 | 143 | 169 | 1.7 | 213 | 7/10 | 75 | 84 |
| Example 1-3 | 15 | 145 | 80 | 190 | Polypropylene | 5 | 30 | 150 | 140 | 168 | 1.6 | 235 | 8/10 | 76 | 84 |
| Example 1-4 | 20 | 145 | 70 | 190 | Polypropylene | 10 | 70 | 330 | 128 | 185 | 1.1 | 210 | 10/10 | 84 | 89 |
| Example 1-5 | 30 | 145 | 55 | 190 | Polypropylene | 15 | 76 | 385 | 127 | 196 | 1.6 | 192 | 9/10 | 76 | 83 |
| Example 1-6 | 32 | 145 | 55 | 190 | Polypropylene | 13 | 78 | 390 | 124 | 193 | 1.7 | 188 | 7/10 | 74 | 84 |
| Example 1-7 | 40 | 145 | 45 | 190 | Polypropylene | 15 | 80 | 400 | 123 | 198 | 1.7 | 160 | 7/10 | 74 | 83 |
| Example 1-8 | 20 | 110 | 70 | 170 | Polypropylene | 10 | 75 | 350 | 125 | 186 | 1.7 | 194 | 7/10 | 74 | 84 |
| Example 1-9 | 20 | 120 | 70 | 175 | Polypropylene | 10 | 73 | 340 | 126 | 184 | 1.7 | 197 | 7/10 | 75 | 84 |
| Example 1-10 | 20 | 130 | 70 | 180 | Polypropylene | 10 | 72 | 336 | 127 | 182 | 1.6 | 199 | 8/10 | 76 | 84 |
| Example 1-11 | 20 | 160 | 70 | 205 | Polypropylene | 10 | 30 | 155 | 142 | 180 | 1.8 | 237 | 7/10 | 75 | 82 |
| Example 1-12 | 20 | 150 | 79 | 205 | Polypropylene | 1 | 66 | 335 | 137 | 155 | 1.8 | 217 | 7/10 | 74 | 82 |
| Example 1-13 | 20 | 160 | 62 | 205 | Polypropylene | 18 | 15 | 40 | 143 | 205 | 1.9 | 242 | 6/10 | 73 | 82 |
| Example 1-14 | 30 | 145 | 55 | 190 | Poly(4-methylpentene) | 15 | 71 | 360 | 130 | 250 | 1.7 | 212 | 9/10 | 75 | 84 |
| Example 1-15 | 30 | 145 | 55 | 190 | Cycloolefin copolymer | 15 | 72 | 365 | 129 | 230 | 1.7 | 214 | 9/10 | 74 | 85 |
| Comparative Example 1 | / | / | / | / | / | / | 5 | 6 | 150 | 154 | 2.7 | 230 | 1/10 | 61 | 59 |
| Comparative Example 2 | / | / | / | / | Polypropylene | 100 | 2 | 2 | 168 | 210 | 2.6 | 287 | 2/10 | 62 | 60 |
| Comparative Example 3 | 20 | 190 | 70 | 190 | Polypropylene | 10 | 9 | 9.5 | 147 | 181 | 2.0 | 234 | 4/10 | 69 | 69 |
| Comparative Example 4 | 20 | 145 | 70 | 165 | Polypropylene | 10 | 85 | 410 | 120 | 180 | 2.7 | 90 | 3/10 | 62 | 62 |

| | x (%) | $H_1$ (J/g) | y (%) | $H_2$ (J/g) | High-temperature resistant resin material | z (%) | Shutdown rate (kΩ/min) | Maximum resistance (kΩ) | Shutdown temperature $T_1$ (°C) | Meltdown temperature $T_2$ (°C) | Tortuosity | Puncture strength (gf) | Hot box test pass rate | Discharge capacity rate at -20°C (%) | Cycle capacity retention rate (%) |
|---|---|---|---|---|---|---|---|---|---|---|---|---|---|---|---|
| Comparative Example 5 | 20 | 145 | 70 | 240 | Polypropylene | 10 | 9 | 9.4 | 146 | 180 | 2.0 | 235 | 4/10 | 70 | 70 |
| Comparative Example 6 | 20 | 100 | 70 | 165 | Polypropylene | 10 | 90 | 430 | 117 | 179 | 2.8 | 70 | *2/10* | 60 | 57 |
| Comparative Example 7 | 20 | 190 | 70 | 240 | Polypropylene | 10 | 8 | 8 | 148 | 178 | 2.5 | 238 | *2/10* | 62 | 63 |
| Comparative Example 8 | 5 | 145 | 90 | 190 | Polypropylene | 5 | 7 | 8 | 149 | 167 | 3.0 | 239 | 1/10 | 63 | 63 |
| Comparative Example 9 | 55 | 145 | 40 | 190 | Polypropylene | 5 | 86 | 426 | 119 | 165 | 2.6 | 80 | *2/10* | 64 | 60 |
| Comparative Example 10 | 10 | 145 | / | / | Polypropylene | 90 | 9 | 9.5 | 148 | 208 | 2.2 | 217 | 4/10 | 68 | 69 |
| Comparative Example 11 | / | / | 88 | 190 | Polypropylene | 12 | 8 | 8 | 149 | 190 | 2.5 | 236 | *2/10* | 63 | 62 |

EP 4 726 899 A1

Note: "/" in Table 1 indicates no relevant preparation parameter.

**Table 2**

| | x (-%) | MFR$_1$ (g/10 min) | y (-%) | MFR$_2$ (g/10 min) | High-temperature resistant resin material | Shutdown rate (kΩ/min) | Maximum resistance (kΩ) | Shutdown temperature T$_1$ (°C) | Meltdown temperature T$_2$ (°C) | Tortuosity | Puncture strength (gf) | Hot box test pass rate | Discharge capacity rate at -20°C (%) | Room-temperature cycle capacity retention rate (%) |
|---|---|---|---|---|---|---|---|---|---|---|---|---|---|---|
| Example 1-4 | 20 | 15 | 70 | 1 | 10% Polypropylene | 70 | 330 | 128 | 185 | 1.1 | 210 | 10/10 | 84 | 89 |
| Example 2-1 | 20 | 5 | 70 | 1 | 10% Polypropylene | 65 | 320 | 144 | 166 | 1.8 | 213 | 7/10 | 74 | 82 |
| Example 2-2 | 20 | 6 | 70 | 1 | 10% Polypropylene | 66 | 323 | 143 | 167 | 1.7 | 210 | 7/10 | 74 | 82 |
| Example 2-3 | 20 | 8 | 70 | 1 | 10% Polypropylene | 67 | 325 | 135 | 165 | 1.5 | 208 | 8/10 | 76 | 85 |
| Example 2-4 | 20 | 18 | 70 | 1 | 10% Polypropylene | 75 | 386 | 126 | 167 | 1.6 | 190 | 8/10 | 74 | 84 |
| Example 2-5 | 20 | 19 | 70 | 1 | 10% Polypropylene | 77 | 390 | 125 | 166 | 1.8 | 193 | 8/10 | 74 | 83 |
| Example 2-6 | 20 | 20 | 70 | 1 | 10% Polypropylene | 78 | 395 | 124 | 164 | 1.8 | 189 | 8/10 | 74 | 82 |
| Example 2-7 | 20 | 3 | 70 | 1 | 10% Polypropylene | 60 | 280 | 145 | 165 | 2.0 | 216 | 6/10 | 71 | 82 |
| Example 2-8 | 20 | 25 | 70 | 1 | 10% Polypropylene | 80 | 411 | 123 | 163 | 1.9 | 153 | 7/10 | 72 | 82 |
| Example 2-9 | 20 | 15 | 70 | 0.1 | 10% Polypropylene | 61 | 293 | 141 | 166 | 2.0 | 215 | 7/10 | 71 | 81 |
| Example 2-10 | 20 | 15 | 70 | 0.2 | 10% Polypropylene | 64 | 319 | 151 | 164 | 1.7 | 214 | 8/10 | 74 | 83 |
| Example 2-11 | 20 | 15 | 70 | 1.5 | 10% Polypropylene | 73 | 338 | 127 | 167 | 1.7 | 200 | 8/10 | 75 | 83 |
| Example 2-12 | 20 | 15 | 70 | 3.0 | 10% Polypropylene | 75 | 383 | 127 | 168 | 1.6 | 196 | 7/10 | 71 | 82 |

| | x (-%) | MFR$_1$ (g/10 min) | y (-%) | MFR$_2$ (g/10 min) | High-temperature resistant resin material | Shutdown rate (kΩ/min) | Maximum resistance (kΩ) | Shutdown temperature T$_1$ (°C) | Meltdown temperature T$_2$ (°C) | Tortuosity | Puncture strength (gf) | Hot box test pass rate | Discharge capacity rate at -20°C (%) | Room-temperature cycle capacity retention rate (%) |
|---|---|---|---|---|---|---|---|---|---|---|---|---|---|---|
| Example 2-13 | 20 | 15 | 70 | 0.05 | 10% Polypropylene | 59 | 278 | 143 | 167 | 1.8 | 210 | 6/10 | 70 | 81 |
| Example 2-14 | 20 | 15 | 70 | 5 | 10% Polypropylene | 78 | 389 | 123 | 166 | 1.7 | 160 | 6/10 | 70 | 80 |
| Example 2-15 | 20 | 15 | 70 | 1 | 10% Poly(4-methylpentene) | 71 | 334 | 130 | 190 | 1.3 | 204 | 9/10 | 78 | 87 |
| Example 2-16 | 20 | 15 | 70 | 1 | 10% Cycloolefin copolymer | 72 | 335 | 129 | 188 | 1.2 | 206 | 9/10 | 78 | 85 |

Referring to Table 1, from Examples 1-1 to 1-15 and Comparative Examples 1 to 11, it can be seen that when the separator contains only one resin material, the separators in Comparative Examples 1 and 2 exhibited a lower shutdown rate and a lower maximum resistance, resulting in inferior shutdown effectiveness, and the separators could not achieve both low shutdown temperature and high meltdown temperature. Although the separators exhibited higher puncture strength, the hot box test pass rates of the lithium-ion batteries in Comparative Examples 1 and 2 were lower than those in the examples, and the low-temperature discharge capacity rates and cycle capacity retention rates were also lower than those in the examples. When the melting enthalpy $H_1$ of the first polyethylene resin material or/and the melting enthalpy $H_2$ of the second polyethylene resin material were too low, the separators in Comparative Examples 4 and 6 exhibited a higher shutdown rate and a higher maximum resistance, a lower shutdown temperature and a higher meltdown temperature, but the separators exhibited a lower puncture strength, the hot box test pass rates of the lithium-ion batteries in both Comparative Examples 4 and 6 were lower than those in the examples, and the low-temperature discharge capacity rates and cycle capacity retention rates were also lower than those in the examples. When the melting enthalpy $H_1$ of the first polyethylene resin material or/and the melting enthalpy $H_2$ of the second polyethylene resin material were too high, the separators in Comparative Examples 3, 5, and 7 exhibited a lower shutdown rate and a lower maximum resistance, resulting in inferior shutdown effectiveness; although the separators exhibited a lower shutdown temperature, a higher meltdown temperature, and a higher puncture strength, the hot box test pass rates of the lithium-ion batteries in Comparative Examples 3, 5, and 7 were lower than those in the examples, and the low-temperature discharge capacity rates and cycle capacity retention rates were also lower than those in the examples. When the mass percentage x of the first polyethylene resin material was too low and the mass percentage y of the second polyethylene resin material was too high; the separator in Comparative Example 8 exhibited a lower shutdown rate and a lower maximum resistance, resulting in inferior shutdown effectiveness; although the separator exhibited a lower shutdown temperature, a higher meltdown temperature, and a higher puncture strength, the hot box test pass rate of the lithium-ion battery in Comparative Example 8 was lower than those in the examples, and the low-temperature discharge capacity rate and cycle capacity retention rate were also lower than those in the examples. When the mass percentage x of the first polyethylene resin material was too high and the mass percentage y of the second polyethylene resin material was too low, the separator in Comparative Example 9 exhibited a higher shutdown rate, a higher maximum resistance, a lower shutdown temperature, and a higher meltdown temperature, but the separator exhibited a lower puncture strength, the hot box test pass rates of the lithium-ion batteries in Comparative Examples 4 and 6 were lower than those in the examples, and the low-temperature discharge capacity rates and cycle capacity retention rates were also lower than those in the examples. When the porous substrate contained only one polyethylene resin and a high-temperature resistant resin, the separators in Comparative Examples 10 and 11 exhibited a lower shutdown rate and a lower maximum resistance, resulting in inferior shutdown effectiveness; although the separator exhibited a lower shutdown temperature, a higher meltdown temperature, and a higher puncture strength, the hot box test pass rates of the lithium-ion batteries in Comparative Examples 10 and 11 were lower than those in the examples, and the low-temperature discharge capacity rates and cycle capacity retention rates were also lower than those in the examples.

From Examples 1-1 to 1-15, it can be seen that by controlling the melting enthalpy $H_1$ of the first polyethylene resin material, the melting enthalpy $H_2$ of the second polyethylene resin material, the mass percentage x of the first polyethylene resin material, and the mass percentage y of the second polyethylene resin material within the ranges of the present application, and by ensuring that the melting enthalpy $H_1$ of the first polyethylene resin material was lower than the melting enthalpy $H_2$ of the second polyethylene resin material, the shutdown rate of the separator was within the range of the present application, and the separator exhibited a relatively high maximum resistance, resulting in better shutdown effectiveness, and the separator can achieve both low shutdown temperature and high meltdown temperature, the separator exhibited a higher puncture strength, the lithium-ion batteries in the examples exhibited higher hot box test pass rates, higher low-temperature discharge capacity rates, and higher cycle capacity retention rates, indicating that the lithium-ion batteries in the examples of the present application exhibited better high-temperature safety performance and electrochemical performance.

The shutdown rate of the separator $= (R_2 - R_1)/(t_2 - t_1)$. As can be seen from FIG. 1, in Example 1-2, the resistance surged to 135 kΩ within 6 min, the shutdown rate of the separator was 25 kQ/min, a relatively high value. The mass percentage z of the high-temperature resistant resin generally affects the high-temperature safety performance of the lithium-ion battery. From Examples 1-1 to 1-7 and Examples 1-12 to 1-13, it can be seen that when the mass percentage z of the high-temperature resistant resin was within the range of the present application, the separator exhibited a higher shutdown rate, a higher maximum resistance, a lower shutdown temperature, a higher meltdown temperature, a higher puncture strength, the hot box test pass rate of the lithium-ion battery was higher, and the low-temperature discharge capacity rate and cycle capacity retention rate were higher, thereby indicating that the lithium-ion batteries in these examples exhibited good high-temperature safety performance and electrochemical performance.

The type of the high-temperature resistant resin generally affects the high-temperature safety performance of the lithium-ion battery. From Example 1-5 and Examples 1-14 to 1-15, and Example 1-3 and Examples 2-15 to 2-16, it can be seen that when the high-temperature resistant resin within the present application was selected, the separator exhibited a higher shutdown rate, a higher maximum resistance, a lower shutdown temperature, a higher meltdown temperature, a higher puncture strength, the hot box test pass rate of the lithium-ion battery was higher, and the low-temperature discharge capacity rate and cycle capacity retention rate were higher, thereby indicating that the lithium-ion batteries in these examples exhibited good high-temperature safety performance and electrochemical performance.

Referring to Table 2, the melt flow rate $MFR_1$ of the first polyethylene resin material and the melt flow rate $MFR_2$ of the second polyethylene resin material generally affect the high-temperature safety performance of the lithium-ion battery. From Example 1-4 and Examples 2-1 to 2-16, it can be seen that when the melt flow rate $MFR_1$ of the first polyethylene resin material and the melt flow rate $MFR_2$ of the second polyethylene resin material were within the ranges of the present application, and the melt flow rate $MFR_1$ of the first polyethylene resin material was higher than the melt flow rate $MFR_2$ of the second polyethylene resin material, the separator exhibited a higher shutdown rate, a higher maximum resistance, a lower shutdown temperature, a higher meltdown temperature, a higher puncture strength, the hot box test pass rate of the lithium-ion battery was higher, and the low-temperature discharge capacity rate and cycle capacity retention rate were higher, thereby indicating that the lithium-ion batteries in these examples exhibited good high-temperature safety performance and electrochemical performance.

**Table 3**

|  | Mass percentage of fluoroethylene carbonate (%) | Hot box test pass rate | Discharge capacity rate at -20°C (%) | Cycle capacity retention rate (%) |
|---|---|---|---|---|
| Example 1-5 | 0 | 9/10 | 76 | 83 |
| Example 3-1 | 0.1 | 10/10 | 79 | 85 |
| Example 3-2 | 5 | 10/10 | 81 | 87 |
| Example 3-3 | 4 | 10/10 | 84 | 88 |
| Example 3-4 | 12 | 10/10 | 77 | 85 |
| Example 3-5 | 6 | 10/10 | 78 | 85 |
| Example 3-6 | 20 | 6/10 | 72 | 73 |

The mass percentage of fluoroethylene carbonate in the electrolyte generally affects the high-temperature safety performance of the lithium-ion battery. From Example 1-5 and Examples 3-1 to 3-6, it can be seen that when the mass percentage of fluoroethylene carbonate in the electrolyte was within the range of the present application, the hot box test pass rate of the lithium-ion battery was higher, and the low-temperature discharge capacity rate and cycle capacity retention rate were higher, thereby indicating that the lithium-ion batteries in these examples exhibited good high-temperature safety performance and electrochemical performance.

It should be noted that, in this specification, relational terms such as first and second are only used to distinguish one entity or operation from another entity or operation, and do not necessarily require or imply any such actual relationship or order between these entities or operations. Moreover, the terms "comprise", "include" or any other variants thereof are intended to cover non-exclusive inclusion, so that a process, method, or article that includes a series of elements not only includes those elements, but also includes other elements not explicitly listed, or also includes elements inherent to such process, method, or article.

The embodiments in this specification are all described in a related manner, and the same and similar parts between the embodiments can be referred to each other. The description of each embodiment focuses on the differences from other embodiments.

The above are only preferred embodiments of the present application and are not intended to limit the protection scope of the present application. Any modifications, equivalent replacements, improvements, and the like made within the spirit and principles of the present application are included in the protection scope of the present application.

**Claims**

1. An electrochemical apparatus, comprising a positive electrode plate, a negative electrode plate, a separator, and an electrolyte, wherein the separator is disposed between the positive electrode plate and the negative electrode plate, the separator comprises a porous substrate, and the porous substrate comprises a first polyethylene resin material and a second polyethylene resin material;

wherein a melting enthalpy of the first polyethylene resin material is 110 J/g to 160 J/g, and a melting enthalpy of the second polyethylene resin material is 170 J/g to 205 J/g;

based on the mass of the porous substrate, a mass percentage of the first polyethylene resin material is 10% to 40%, and a mass percentage of the second polyethylene resin material is 45% to 88%; and a shutdown rate of the separator is 10 kΩ/min to 80 kΩ/min.

2. The electrochemical apparatus according to claim 1, wherein the melting enthalpy of the first polyethylene resin material is 130 J/g to 160 J/g, and the melting enthalpy of the second polyethylene resin material is 180 J/g to 205 J/g.

3. The electrochemical apparatus according to claim 1, wherein, based on the mass of the porous substrate, the mass percentage of the first polyethylene resin material is 15% to 30%, and the mass percentage of the second polyethylene resin material is 60% to 80%.

4. The electrochemical apparatus according to claim 1, wherein a melt flow rate of the first polyethylene resin material is 5 g/10 min to 20 g/10 min; and a melt flow rate of the second polyethylene resin material is 0.1 g/10 min to 3.0 g/10 min.

5. The electrochemical apparatus according to claim 1, wherein a maximum resistance of the separator after high-temperature shutdown is in a range of 10 kΩ to 400 kΩ.

6. The electrochemical apparatus according to claim 1, wherein the maximum resistance of the separator after high-temperature shutdown is in a range of 40 kΩ to 400 kΩ.

7. The electrochemical apparatus according to claim 1, wherein a shutdown temperature of the separator is 120°C to 145° C, and a meltdown temperature is 155°C to 250° C.

8. The electrochemical apparatus according to claim 1, wherein the porous substrate further comprises a high-temperature resistant resin, the high-temperature resistant resin comprises one of a crystalline polymer or an amorphous polymer, the high-temperature resistant resin comprises at least one of polypropylene, poly(4-methylpentene), polytetrafluoroethylene, polyvinylidene fluoride, or cycloolefin copolymer, and based on the mass of the porous substrate, a mass percentage of the high-temperature resistant resin is 2% to 15%.

9. The electrochemical apparatus according to claim 1, satisfying at least one of the following characteristics:

   (a) the melt flow rate of the first polyethylene resin material is 8 g/10 min to 18 g/10 min;
   (b) the melt flow rate of the second polyethylene resin material is 0.2 g/10 min to 1.5 g/10 min.

10. The electrochemical apparatus according to claim 1, wherein a tortuosity of the separator is 1.1 to 2.0.

11. The electrochemical apparatus according to claim 1, wherein the shutdown rate of the separator is 25 kΩ/min to 80 kΩ/min.

12. The electrochemical apparatus according to claim 1, wherein the electrolyte comprises fluoroethylene carbonate, and based on the mass of the electrolyte, a mass percentage of fluoroethylene carbonate is 0.1% to 12%.

13. The electrochemical apparatus according to claim 1, wherein the electrolyte comprises fluoroethylene carbonate, and based on the mass of the electrolyte, a mass percentage of fluoroethylene carbonate is 0.1% to 5%.

14. An electronic apparatus comprising the electrochemical apparatus according to any one of claims 1 to 13.

FIG. 1

## INTERNATIONAL SEARCH REPORT

| International application No. |
| --- |
| **PCT/CN2024/090301** |

| A. | CLASSIFICATION OF SUBJECT MATTER |
| --- | --- |

H01M50/417(2021.01)i; H01M50/491(2021.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC: H01M50、H01M10

Documentation searched other than minimum documentation to the extent that such documents are included in the fields searched

Electronic data base consulted during the international search (name of data base and, where practicable, search terms used)

CNTXT, ENTXTC, DWPI, CNKI, ISI_web of science: 第二聚乙烯, 第一聚乙烯, 多孔, 隔膜, 隔板, 隔离膜, 聚乙烯, 热焓, 熔融指数, 熔指, 电化学装置, 电池, diaphragm, enthalpy, PE, polyethylene, porous substrate, membrane, film, separator, electrochemical device, battery

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116435707 A (NINGDE AMPEREX TECHNOLOGY LTD.) 14 July 2023 (2023-07-14) claims 1-14 | 1-14 |
| Y | CN 115458867 A (LUCKY FILM CO., LTD. et al.) 09 December 2022 (2022-12-09) description, paragraphs 2-103 | 1-14 |
| Y | CN 111138741 A (CHONGQING YUNTIANHUA NEWMI-TECH CO., LTD.) 12 May 2020 (2020-05-12) description, paragraphs 2-61 | 1-14 |
| A | CN 110931688 A (CHONGQING YUNTIANHUA NEWMI-TECH CO., LTD.) 27 March 2020 (2020-03-27) description, paragraphs 4-16, embodiments 1-4, and table 1 | 1-14 |
| A | CN 113964448 A (HUAWEI TECHNOLOGIES CO., LTD. et al.) 21 January 2022 (2022-01-21) description, paragraphs 3-72, and specific embodiments | 1-14 |
| A | US 2018090732 A1 (TOYOTA MOTOR CO., LTD.) 29 March 2018 (2018-03-29) entire document | 1-14 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 June 2024** | **01 July 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/090301**

| Patent document cited in search report | | | Publication date (day/month/year) | Patent family member(s) | | | Publication date (day/month/year) |
|---|---|---|---|---|---|---|---|
| CN | 116435707 | A | 14 July 2023 | None | | | |
| CN | 115458867 | A | 09 December 2022 | None | | | |
| CN | 111138741 | A | 12 May 2020 | None | | | |
| CN | 110931688 | A | 27 March 2020 | None | | | |
| CN | 113964448 | A | 21 January 2022 | WO | 2022002094 | A1 | 06 January 2022 |
| US | 2018090732 | A1 | 29 March 2018 | US | 10541400 | B2 | 21 January 2020 |
| | | | | JP | 2018055888 | A | 05 April 2018 |
| | | | | JP | 6443696 | B2 | 26 December 2018 |
| | | | | CN | 107871837 | A | 03 April 2018 |
| | | | | CN | 107871837 | B | 21 August 2020 |
| | | | | US | 10541400 | B2 | 21 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310685198